# EUROPEAN PATENT SPECIFICATION

(11) **EP 3 320 378 B1**
(45) Date of publication and mention of the grant of the patent: **09.09.2020**
(21) Application number: 16736105.4
(22) Date of filing: 05.07.2016
(51) Int. Cl.: G01V 5/00

(54) **A METHOD OF SECURITY SCANNING OF CARRY-ON ITEMS, AND A CARRY-ON ITEMS SECURITY SCANNING SYSTEM**
VERFAHREN ZUR SICHERHEITSABTASTUNG VON HANDGEPÄCKSTÜCKEN UND SICHERHEITSABTASTSYSTEM VON HANDGEPÄCKSTÜCKEN
PROCÉDÉ DE BALAYAGE DE SÉCURITÉ D'ARTICLES À BAGAGES À MAIN ET SYSTÈME DE BALAYAGE DE SÉCURITÉ D'ARTICLES À BAGAGES À MAIN

(30) Priority: 06.07.2015 EP 15175560; 06.07.2015 EP 15175559
(43) Date of publication of application: 16.05.2018
(73) Proprietor: Exruptive A/S, 2640 Hedehusene (DK)
(72) Inventor: POULSEN, Henning, Friis, 4000 Roskilde (DK); OLSEN, Ulrik, Lund, 2880 Bagsværd (DK); KEHRES, Jan, 2770 Kastrup (DK)
(74) Representative: Inspicos P/S
(86) International application number: PCT/EP2016/065887
(87) International publication number: WO 2017/005757

(56) References cited:
- EP-A1- 0 358 965
- WO-A2-2005/010561
- WO-A2-2006/074431
- WO-A2-2008/020886
- US-A- 6 035 014
- US-A1- 2003 128 804
- US-A1- 2006 098 773

## Description

A method of security scanning of carry-on items, and a carry-on items security scanning system.

The present invention relates to a method of security scanning of carry-on items, according to claim 1.

A method of this kind is described in WO 2006/074431 where it is suggested to keep carry-on items on the cart used to transport them and pass the cart with the carry-on items through an X-ray scanning system. There is only a single stage scanning module, and the detectors in this module may be L-shaped or planar. The captured 2D images are analyzed for threats, and if no threat is found after the scanning in the single stage module, the cart is cleared and returned to the person to whom the carry-on items belong. However, if a potential threat is found, then the image is sent to a workstation where security personnel can view the image and make a determination of whether the articles in the cart need to be hand searched.

WO 03/065077 describes carry-on items scanned one after the other. The scanning is thus performed on a single carry-on item, and the carry-on items disclosed are all carry-on luggage, viz. hand luggage, having well-defined outer side walls. The individual carry-on item is scanned in the first stage module, and if the analysis determines that the contents are without contraband items, then a diverter device may direct the carry-on item to a discharge path. If the carry-on item is not diverted it continues to further scanning in the second stage module. The scanning in the first stage module is a CT scanning involving a ringshaped detector, and the X-ray source rotates in ring around the carry-on item at considerable speed, and the scanning of the carry-on item involves generating at least 1000 projections of 2D image data, and the reconstruction of the 3D representation can be performed with accuracy due to the high number of 2D projections.

CT scanning has a disadvantage in that the first stage module is very large and heavy due to the rotating mechanism used for the scanning. A CT scanner is typically located on the ground floor or in a basement where solid foundation is available, and the CT scanner also requires heavy shielding in order not to be a health risk to people.

US 2006/098773 describes scanning of luggage piece by piece in two stages where the first module uses two sources, and the second module uses diffraction scanning. The two sources in the first module are arranged symmetrically with respect to the direction of transport. The pictures from the frst module are used in pairs in order to allow for triangulation of positions.

WO 2008/020886 describes scanning of luggage piece by piece in a single stage and reconstruction of the single piece of luggage.

Scanning of carry-on items is different from scanning checked-in luggage. Checked-in luggage can be scanned at remote location because the luggage items are transported in their own flow and along their own transport path, without any physical proximity to the person to whom the luggage item belongs. Scanning of checked-in luggage may thus be performed at a location suitable for the scanning equipment, and it does not so much matter if the scanning equipment is large and heavy. Scanning of checked-in luggage can be performed at any convenient time between checking-in of the luggage item and delivery of the scanned luggage, such as at an airplane before it departs. There will typically be at least 20 minutes available for routing the luggage item and for the scanning, sometimes even about an hour.

Carry-on items follow the person to whom the carry-on items belong, because the person transports the carry-on items along the path of the person. When security checking is to be performed, the person is temporarily delivering the carry-on items to the checking facility, and the person waits until the checking of the carry-on items is completed, and then the person receives the carry-on items and may continue onwards together with the carry-on items. The security scanning of carry-on items is thus preferably to be performed immediately when the person delivers the carry-on items for the security check, and it is to be performed in vicinity of the person.

For personal safety reasons the CT scanning requires that the equipment is distant from the person to whom the carry-on item belongs, and although this may find a solution where the scanning equipment is located at a floor below where the person is delivering and receiving the carry-on item, such a solution requires space.

Scanning of carry-on items has for years been performed without the step of reconstructing the 3D representation of the carry-on items. An example of this is given in US 5,600,303 where receiving carry-on items are received and scanning in a first stage module using at least one X-ray source and first detectors to conduct transmission contrast radiography generating a projection of two-dimensional 2D image data of the carry-on items. The 2D image can be enhanced, such as by edge sharpening and contrast enhancement, and be analyzed by computer for possible threats, and then an operator views the enhanced 2D image and determines whether further scanning is required, and if required, the carry-on item is scanned in a second stage module using at least one X-ray source and at least one second detector. The first stage module can be of small and simple construction, and it may be properly shielded without any great difficulty. But an operator is required to view the 2D image.

US 2010/0220835 A1 discloses a method of and an apparatus for obtaining radiation interaction data related to an image of an object. The method involves using a detector system for detecting and collecting spectroscopically resolvable information about incident radiation, and collecting one or more datasets of information at the detector after interaction with an object. Each dataset is resolved across at least three frequency bands within the spectrum of the source. The ratio between measured intensities is evaluated for at least two pairs of such frequency bands in a given intensity dataset to obtain a numerical indicator in functional relationship with a material property. The numerical indicator is then compared with a library of data characteristics of target materials.

It is an object of the present invention to improve the security scanning of carry-on items.

The carry-on items are received as a group on a carrier and are scanned simultaneously as a group, and this simplifies the handling of carry-on items and the scanning, as it is avoided to separate the individual carry-on items and avoided to pass them one after another trough scanning as individual objects scanned one by one. It is an improvement in handling and faster scanning is achieved by simultaneously scanning a group of carry-on items on a carrier.

The reconstruction of the three-dimensional representation of the group of carry-on items by the at least one processing unit as well as the subsequent analyzing by the at least one processing unit to determine whether further scanning is required are performed without manual action, and the processing is performed fast because only a very limited number of images needs processing, in contrast to the processing involved in CT scanning handling thousands of images. If for instance 12 first detectors are used in step b) then 12 images are to be used for each energy channel in the reconstruction of the three-dimensional representation of the group of carry-on items by the at least one processing unit.

The reconstruction of the three-dimensional representation of the carry-on items is facilitated by using at least three line-shaped first detectors, each generating projections of two-dimensional image data of the carry-on items. The projections of two-dimensional image data of the carry-on items obtained by the at least three line-shaped first detectors compensate in the process of reconstruction for the complexity caused by the simultaneously scanning of the group of carry-on items on the carrier. The reconstruction of the three-dimensional representation of the carry-on items allows computerized analysis of whether further scanning is required, and there is consequently less need, or no need for an operator to make a human determination of possible threats in the carry-on items based on the results of scanning in the first stage module.

The at least dual energy resolution of the individual first detector facilitates the analyzing of the three-dimensional representation in order to determine whether further scanning is required. The energy resolution provides additional information as to the nature of the materials in the carry-on items and allows improved separation into individual carry-on items in the group of carry-on items on the carrier. In the invention, the individual first detector has multi-energy resolution, such as an energy resolution in the range from 2 to 256 energy levels, suitably at least 64 energy levels, such as 128 energy levels. The signal acquisition may occur with a higher number of channels, the signals from which are binned to fewer energy levels as mentioned in order to reduce noise.

By employing at least three line-shaped first detectors in the first stage module, the first stage module is designed and operates in a manner that allows installation in an area where the persons carrying or transporting the carry-on items passes, because the shielding required in order to obtain adequate personal safety against X-ray radiation is easy to establish, and because the first stage module has outer dimensions of relatively small size, and the first stage module has a weight allowing installation in ordinary building structures.

The at least three line-shaped first detectors each detect a projection of two-dimensional image data of the carry-on items and the at least three projections of two-dimensional image data have mutually different orientations in space and they are each detected with an energy resolution of at least two levels. Examples of carry-on items are handbags, briefcases, a travel bag, a shopping bag, a coat, a jacket, a scarf, a jersey, a computer bag, purses, key rings, and phones. Each item appears in at least three projections of the two-dimensional image data, which projections have mutually different orientations and energy resolution is available for the at least three mutually different orientations. The reconstruction of the three-dimensional representation of the carry-on items allows determination of not only content items within a single piece of carry-on item, but also determination of the individual carry-on items in the group of carry-on items on the carrier.

The X-ray source and first detectors may be mounted in a fixed structure so that their mutual positioning is fixed, but the fixed structure being movable, such as sideways or in the direction of height in order to make room for a carrier with a over-sized carry-on item or in order to perform scanning of a group of carry-on items, however, preferably the at least one X-ray source and first detectors are stationary during scanning in step b). The first stage module has more simple structure and design when the at least one X-ray source and first detectors remain stationary.

Preferably the scanning in step b) generates from 3 to 20 projections of two-dimensional image data of the carry-on items. It is possible to maintain the group of carry-on items on the carrier in stationary position within the first stage module, and then perform the scanning in a sequential manner and position the at least one X-ray source and a first detector in a predetermined position for the individual scan and shift the at least one X-ray source and the first detector between the predetermined positions. However, this will prolong the scanning procedure. It is consequently preferred that the first stage module has one structurally fixedly mounted first detector an associated fixedly mounted X-ray source for each of the projections to be generated during scanning so that all scans are performed simultaneously. This also allows the group of carry-on items on the carrier to be movable through the first stage module during the scanning. In an embodiment, the first stage module has an intermediate floor and at least one of the first detectors mounted below the intermediate floor. The carrier or cart may thus be movable on the intermediate floor in the direction of transport through the first stage module. It is even more preferred that the scanning in step b) generates from 3 to 14 projections of two-dimensional image data of the carry-on items, as this reduces the number of first detector to a maximum of 14. A further reduction in the number of first detector is obtained in a suitable configuration where the scanning in step b) generates from 3 to 9 projections of two-dimensional image data of the carry-on items. However, it is possible that the scanning in step b) generates from 3 to 30 projections of two-dimensional image data of the carry-on items.

In a preferred example the reconstruction of the three-dimensional representation in step c) uses external information in addition to the two-dimensional image data from the at least 3 projections of the carry-on items. As an example, the external information may be a stored library of characteristics of typical carry-on items, as handbags, briefcases, travel bags, shopping bags, coats, jackets, a scarf, jerseys, computer bags, purses, key rings, and phones have typical sizes, typical shapes, and are of typical materials.

Preferably, the external information is selected as one or more from a group comprising i-a) information on the outer shape of carry-on items in the group of carry-on items; i-b) real materials provide positive attenuation and no generation of X-rays in the material; i-c) an individual object in a carry-on item, or the carry-on item itself, has the same density; i-d) segmentation of the projections of two-dimensional image data provide information on boundaries between areas of different materials. Other types of external information are also possible, such as personal information pertaining to the person or persons to whom the group of carry-on items belong. If the person is male, a carry-on bag is typically of a different type than if the person is female. If a person travels for business purpose, the carry-on items have typically a different composition than when the person is a leisure traveller. In case the security scanning is at an airport the range of carry-on items will have a larger variety of types than when the security scanning is at a concert hall or at a courthouse. The stored library of characteristics of typical carry-on items can be adapted to the particular setting for the security scanning.

The three-dimensional representation of the group of carry-on items may be segmented into regions of similar material, based on the detected attenuation. Voxels in the three-dimensional representation may thus be grouped into regions in order to simplify calculations.

Preferably, the analyzing in step d) involves categorization of voxels or regions in the three-dimensional representation into one of known restricted materials, known safe materials, or unknown materials, and said categorization of voxels or regions may furthermore be associated with an estimate of accuracy. This preferred manner of categorization allows for more speedily processing of the data. However, it is alternatively possible to categorize into only restricted materials, but then a larger proportion of the groups of carry-on items will be determined as requiring further scanning, and this will make the overall security scanning process more time-consuming.

In a further optional development based on the categorization, step d) determines that further scanning is required if an estimate of accuracy for a voxel or region categorized as a known restricted material or as a known safe material is below a first pre-defined threshold. When the estimate of accuracy is above the pre-determined threshold value, then the voxel category or region category is taken as a definite categorization and the particular group of carry-on items is deemed to hold a threat if the category is a known restricted material. If all voxels or regions in the particular group of carry-on items are categorized as above the threshold value and as known safe materials, then the particular group of carry-on items is accepted as safe and the carrier is shifted to a release station without being scanned in the second stage module.

In yet a further optional development based on the categorization, step d) determines that further scanning is required if an estimate of accuracy for a voxel or a region categorized as an unknown material is below a second pre-defined threshold, the second pre-defined threshold being higher than the first pre-defined threshold. Unknown materials are assumed to be safe, but the categorization as unknown material has preferably been set to require a higher accuracy in order to be classified as unknown material. If the classification as unknown material is associated with an estimated accuracy below the second pre-defined threshold, then it is preferred that the particular group of carry-on items is directed to further scanning in the second detector in order to resolve the uncertainty in the determination of the category of the voxel or the region. As an alternative, any voxel or region being candidate to categorization as unknown material is determined to require further scanning in the second stage module.

Preferably, the groups of carry-on items determined in step d) to require further scanning are in average over a week of operation at the most 10 percent of all groups of carry-on items scanned during the week. The further scanning is time-consuming and the efficiency of the security scanning is high when at least 90 percent of all groups of carry-on items scanned are either determined to include a threat or to not include a threat solely by the scanning in the first stage module and the subsequent reconstruction and analyzing. The scanning in the second stage module will for a large proportion of the groups requiring further scanning determine with high accuracy whether the individual group of carry-on items actually includes a threat or actually does not include a threat, and consequently only very few groups of carry-on items require a subsequent manual inspection by security personnel. A lower level of determination without scanning in the second stage module is also possible, but less preferable, such as the groups of carry-on items determined in step d) to require further scanning are in average over a week of operation at the most 20 percent of all groups of carry-on items scanned during the week.

It is an advantage of the security scanning method according to the present invention that it can determine with a high degree of certainty whether a group of carry-on items contains a threat or not, and that this determination can be done without manual inspection of the group of carry-on items.

Preferably, the carrier of the individual group of carry-on items is a cart used by a person to transport the person's personal group of carry-on items. This makes the security scanning of the group of carry-on items very simple, because the person does not need to unload the carry-on items onto a special carrier used only for security scanning purposes, but may simply pass the cart used to transport the carry-on items to the security scanning location through the security scanning, possibly after having placed additional carry-on items onto the cart, such as key rings, a phone or a piece of garment, in order to simplify personal scanning in a separate procedure for such scanning. When the cart has been scanned and accepted as holding no threat, it is simply released to the person, and the person can immediately continue in the travel path desired without having to remove the carry-on items from the carrier used during the security scanning. However, it is also possible to use a carrier that is dedicated for security scanning, and then the carry-on items need to be loaded onto the carrier before scanning and to be removed from the carrier after completed scanning.

Preferably, the group of carry-on items on the carrier may include content items holding liquid amounts in the range of 0.13 l to 3 l. It is currently a requirement at many security scanning locations, such as at airports that content items have to be removed from the carry-on item if the content item fulfils certain criteria, such as a liquid amount on excess of 0.1 I. Many bottles hold more than 100 ml of liquid, and it is thus cumbersome to travelling persons that current security scanning systems cannot determine that for instance a bottle of water is actually a bottle of water and pose no security threat. The method of security scanning according to the present invention is capable of making the determination whether a liquid is a threat or not. This determination is performed on small volumes, called voxels, and these volumes are much smaller than a volume holding 100 ml. The method of security scanning according to the present invention is consequently capable of determining whether a liquid is a threat or not irrespective of whether the item holding the liquid is larger than 100 ml or smaller than 100 ml. When the method of security scanning is capable of determining whether a content item holding liquid amounts in the range of 0.13 I to 3 l is a threat or not, then the method can determine whether a content item holding liquid is a threat, also when the liquid amount in the content item is lower than 130 ml or higher than 3000 ml. To the persons carrying the groups of carry-on items, it will be a relief not to have to take out singular content items from a carry-on item, just because it contains liquid in an amount over 100 ml.

Preferably, the scanning in step e) of the group of carry-on items determined in step d) to have at least one local area requiring further scanning is further scanned in a second stage module, in which the group of carry-on items and the X-ray source are mutually positioned so that a measuring position is in line with the local area requiring further scanning, wherein the X-ray source emits photons in a polychromatic X-ray beam, and at least one second detector detects diffracted X-rays from the local area. The scanning in the second-stage module is performed on the individual local area requiring further scanning, and if there is more than one such local area in a group of carry-on items, then each local area is separately scanned, either one local area after the other by the same X-ray source and focusing device and second detector, or two or more local areas simultaneously in case the second-stage module is provided with two or more sets of X-ray source, focusing device and second detector(s). The simultaneous scanning may possibly be followed by one or more subsequent scans. If for instance, the group of carry-on items includes 5 local areas requiring further scanning and the second-stage module is provided with two sets of X-ray source, focusing device and second detector, then scanning is performed as three subsequent scans, two of which involve simultaneous scanning of two local areas. An advantage of scanning a local area only, is that the X-ray source can have less power and yet provide a X-ray beam of the desired energy flux density, because the dimensions of the local area are small, such as a width and a breadth of less than 5 mm by 5 mm, and the X-ray beam may even illuminate only a portion of the local area. A X-ray source of low power, such as a power in the range from 0.5 kW to 4 kW, requires less shielding and is easier to install in a second-stage module located near the transport path of the persons to which the groups of carry-on items belong.

Preferably, a third detector in the second stage module detects X-rays in the direct beam from the local area. It is possible to use only the second detector. However, it is also possible to arrange a third detector to detect X-rays in the direct beam from the local area. The third detector detects the direct beam after passing through the measuring position within the group of carry-on items and thus accounts for the absorption of X-rays at the specific location where the X-ray beam passes through the group of carry-on items. This absorption can be utilized to correct the diffracted X-rays detected on the second detector for the effect of absorption.

In an embodiment, photons in the polychromatic X-ray beam are focussed towards the measuring position by a focusing device. The focusing of the photons by the focusing device increases the flux density of the incident photons at the measuring position, and the increase in flux density leads to a corresponding decrease in the required measuring time. The polychromatic X-ray beam from the X-ray source is emitted in divergent shape, and in such a divergent shape the flux density of photons decreases with the square of the distance to the X-ray source. The focusing device may capture the whole or a part of the divergent shaped beam from the X-ray source and focuses the photons in the beam towards the measuring position. From the exit of the focusing device the flux density of photons in the polychromatic X-ray beam increases or is substantially constant with increasing distance from the focusing device towards the measuring position.

It is possible to use stationary scanning equipment and then shift the position of the group of carry-on items, but preferably the X-ray source and the focusing device at one side of the measuring position and the at least one second detector at the opposite side of the measuring position are interconnected and movable as a unit during positioning in relation to a single local area requiring further scanning. An advantage of adjusting the position of the scanning equipment is that the group of carry-on items are handled as gently as possible, and this minimizes risks of mutual shifting in positions among the items in the group of carry-on items. The scanning equipment is easily and quickly shifted between measuring positions.

In an embodiment of the second stage module a rotation of at least 10° is effected of the X-ray source and the at least one second detector in relation to the group of carry-on items. The rotation may be caused by rotating the group of carry-on items, but preferably it is the X-ray source and associated detectors that are rotated. The rotation is utilized to ensure full checking of crystalline or semi-crystalline materials, especially when such materials have sheet-like shape. Materials of this kind may present isotropic diffraction patterns, which may involve variations in the diffraction pattern depending on the incoming angle of the X-ray beam. The rotation of at least 10° ensures detection of all relevant diffraction patterns also for sheet-like crystalline materials, and thus a high degree of certainty in detection of materials of problematic nature in relation to security.

In an embodiment the method involves intensity based segmentation of a 3D image, and subsequent merging of regions based on similarity and/or size below a threshold value. The merging of regions allows faster processing and faster determination whether a group of carry-on items contains a possible threat or not.

An example not forming part of the claimed invention also relates to a computer program product comprising program code means adapted to cause a data processing system to perform the steps of reconstruction of the three-dimensional representation of the group of carry-on items and the subsequent analyzing of this three-dimensional representation to determine whether further scanning is required, when said program code means are executed on the data processing system. The program code means may further be adapted to cause the data processing system to perform the steps of intensity based segmentation of the three-dimensional representation of the group of carry-on items, and subsequent merging of regions based on similarity of regions and/or based on a size of region below a threshold value, prior to determining whether a region requires further scanning and/or can be classified as a threat or a no-threat region. The computer program product may furthermore comprise a non-transitory computer-readable medium having stored thereon the program code means. The present invention also relates to a data processing system configured to perform the above-mentioned method steps.

In another aspect, the preset invention relates to a carry-on items security scanning system according to claim 11, comprising an inlet station for carry-on items configured to receive a group of carry-on items on a carrier, a first stage module configured to simultaneously scan the group of carry-on items on the carrier and having at least one X-ray source and first detectors for conducting transmission contrast radiography generating projections of two-dimensional image data of the carry-on items, at least one processing unit operationally connected to said first detectors, wherein said at least one processing unit is configured to reconstruct a three-dimensional representation of the group of carry-on items and to analyze the three-dimensional representation to determine whether further scanning is required, a second stage module is configured to scan the group of carry-on items on the carrier and having at least one X-ray source and at least one second detector for scanning the carry-on items requiring further scanning, and wherein at least three first detectors in the first stage module are line-shaped and arranged in mutually different orientations and have at last dual energy resolution. The effects and advantages explained in the above in relation to the method according to the first aspect of the present invention also apply to the aspect of the security scanning system.

The first stage module is preferably only performing transmission contrast scanning.

In an embodiment according to the present invention the first detectors in the first stage module are line-shaped detectors of a length of at least 1 metre. It is possible to use detectors of shorter length, but a length of at least 100 cm makes it possible for the detector to obtain a projection of two-dimensional image data that extends across the entire individual group of carry-on items on the carrier.

In an embodiment the first stage module has in the range of from 3 to 20 line-shaped detectors arranged in at least three different directions.

In an embodiment the carrier is a cart for use by a person to transport the person's personal group of carry-on items.

In an embodiment there are two or more second detectors arranged along a circle concentric with the direct beam path.

In an embodiment the second stage module has from 5 to 10 second detectors arranged around the central beam from the X-ray source at different angles to the direct beam and/or at different circumferential locations on the circle corresponding to a particular angle to the direct beam. By arranging several second detectors at different circumferential locations on the circle (at different azimuthal angle in relation to the direct X-ray beam) it is possible to compensate for variations in absorption through different objects in the carry-on items.

In an embodiment the X-ray source in the second stage module has a nominal tube voltage of at least 110 kV. Although it is possible that the nominal tube voltage is e.g. 40 kV, the X-ray beam is capable of penetrating through more material when the tube voltage is at least 110 kV, and preferably at least 140 kV. The group of carry-on items may comprise several items, and if for instance three items are overlapping in the beam path from the focusing device to the second detector then it is an advantage with high nominal tube voltage.

In an embodiment the X-ray source in the second stage module is air-cooled and is without water-cooling. This embodiment is of simple design because air is readily at hand and an air intake can suitably be arranged. The weight of the X-ray source and associated housing and mounting is lower when air-cooling is used and water cooling can be dispensed with, and this is in particular an advantage when the source is movably mounted in a frame.

In an embodiment the focussed X-ray beam at the measuring position has a largest cross-sectional dimension in the range of from 4 µm to 500 µm. The diffractions thus originate in a very small volume of material and the diffractions on the second detector are thus detected with very low noise and low degree of smearing, and this improved quality of the detections allows for shortening the time required for a scan, or allows improved validity in the determination of the type of material in the scanned volume.

In an embodiment the at least one second detector has at least dual energy resolution. The at least dual energy resolution provides additional information as to the nature of the materials in the carry-on items and allows improved separation into individual carry-on items in the group of carry-on items on the carrier. Although it is possible in an embodiment to utilize a second detector having no energy resolution, a second detector with energy resolution is preferred. A second detector with multi-energy resolution is preferred, and such a second detector may for example have an acquisition of 1000 to 4000 energy channels, or even as much as 8000 energy channels, and the acquired data are then typically binned to 100 to 200 energy channels or energy levels in post processing in order to reduce noise. The second detector may in this manner have multi-energy resolution, such as an energy resolution of typically 100 to 200 levels, even though fever levels may also be applicable, such as energy resolution in 16 levels, or 56 levels or 128 levels.

The X-ray source and second detectors may be mounted in a fixed structure so that their mutual positioning is fixed, but the fixed structure being movable, such as sideways, or in the direction of height, or in rotational movements about at least one axis of rotation. The rotational movements may occur in an oscillating manner, such as with amplitudes of at least 5 degrees about a neutral position, such as amplitudes in the range from 5 degrees to 25 degrees, or in the range from 10 degrees to 30 degrees, about a neutral position.

Another example not forming part of the claimed invention relates to a method of security scanning of carry-on items, comprising at least the following steps: a) receiving carry-on items, b) scanning the carry-on item in a first stage module using at least one X-ray source and first detectors to conduct transmission contrast radiography generating projections of two-dimensional image data of the carry-on item, c) reconstructing a three-dimensional representation of the carry-on item, d) analysing the three-dimensional representation to determine either that the scanning in step b) provides a final result or that at least one local volume in the carry-on item is requiring further scanning, and the carry-on item determined in step d) to have at least one local area requiring further scanning is further scanned in a second stage module. In this method the carry-on items in step a) are received as a group of carry-on items on a carrier and are scanned simultaneously as a group in step b), and e) a group of carry-on items determined in step d) to have at least one local area requiring further scanning is further scanned in a second stage module, in which the group of carry-on items and a X-ray source and a focusing device are mutually positioned so that a measuring position is in line with the local area requiring further scanning, and the X-ray source emits photons in a polychromatic X-ray beam, which photons are focussed towards the measuring position by the focusing device, and at least one second detector detects diffracted X-rays from the local area.

In an embodiment the focusing device comprises at least one tube-shaped member through which the photons are guided. In a further development the at least one tube-shaped member is surface coated. The surface coating causes reflection of a higher portion of the photons within the tube-shaped member and thus results in a higher flux density at the measuring position.

In an embodiment the at least one tube-shaped member is surface coated with a material having a density of at least 10 g/cm³, preferably a density of at least 16 g/cm³. The high density of the coating improves the ability of the coating to reflect photons.

In an embodiment the at least one tube-shaped member is surface coated with at least one material, or a mixture of materials, selected from the group comprising gold, platinum, iridium, tungsten, silver, palladium, rhodium, ruthenium and molybdenum.

In a further development, the at least one tube-shaped member is surface coated with a multilayer coating comprising at least one layer of a material having a density of at the most 4 g/cm³, and preferably at the most 2.5 g/cm³, such as at least one material, or a mixture of materials, selected from the group comprising silicon, boron carbide and carbon.

The tubular member can be a capillary member, and in an embodiment the focusing device has only a single capillary member. In another embodiment the focusing device comprises a plurality of singular capillary members, which can be bundled in a single bundle or in several bundles. In another embodiment the focusing device comprises a polycapillary member through which the photons are guided. The polycapillary member is a fixed body in which many capillaries are shaped. The polycapillary member can collect a large portion of the fan-shaped beam and focus all capillaries at the measuring position.

In the following, illustrative examples and embodiments of the present invention are described in further detail with reference to the schematic drawings, on which
Fig. 1 illustrates a security scanning system according to the present invention,
Fig. 2 illustrates a first stage module in the system of Fig. 1,
Fig. 3 illustrates an embodiment of a line-shaped first detector,
Fig. 4 illustrates an embodiment of a cart with a group of carry-on items,
Fig. 5 illustrates a second stage module in the system of Fig. 1, Figs. 6, 7 and 8 illustrate a first embodiment, a second embodiment and a third embodiment, respectively, of a focusing device in an embodiment of the second stage module of Fig. 1,
Fig. 9 illustrates in enlargement a wall-section of a further embodiment of the focusing device,
Figs. 10 and 11 illustrate a partial view of a further embodiment of the second stage module,
Fig. 12 illustrates a collimator and second detectors of the embodiment of Fig. 10.
Fig. 13 illustrates a further embodiment of the first stage module,
Fig. 14 illustrates a further embodiment of X-ray source and detectors in the second stage module, and
Fig. 15 illustrates a further arrangement of second detectors and the third detector in the second stage module.

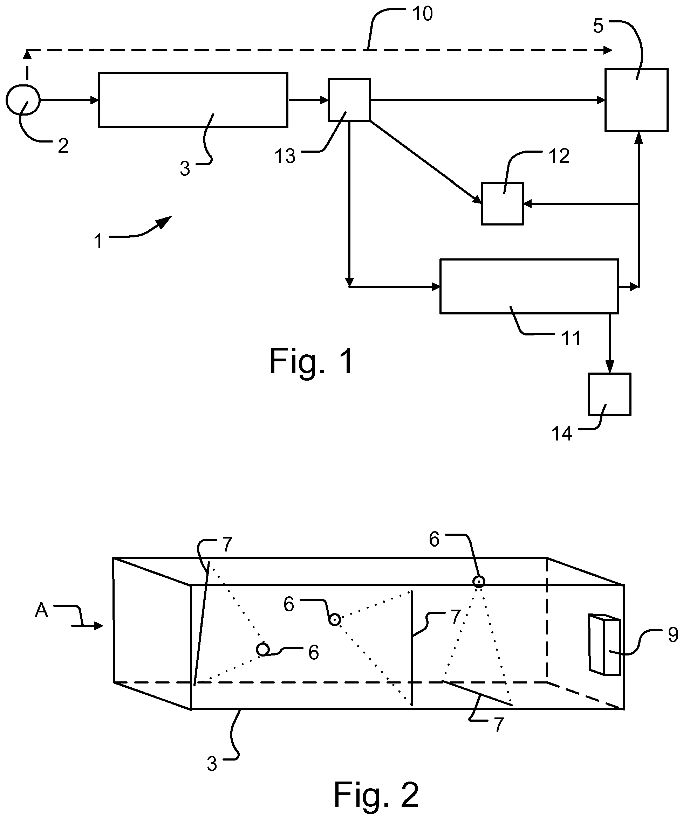

An embodiment of a carry-on items security scanning system is generally denoted 1 in Fig. 1. The security scanning system has an inlet station 2 for carry-on items located at the end of a first stage module 3. A person arriving at the security scanning system in order to be security scanned delivers the carry-on items at the inlet station. In case the security scanning system is located at a facility where the person is carrying the carry-on items, the security scanning system may have carriers for receiving the carry-on items at inlet station 2. In this case, the person places the carry-on items on the carrier as a group 4 of carry-on items. In case the security scanning system is located at a facility, like an airport, where carts are provided for transporting carry-on items within the facility, the cart with the group of carry-on items is simply delivered at the inlet station 2. The person then walks to a release station 5 along a path 10 as indicated by the broken line, and on the way the person may pass a scanning station for scanning persons.

In the following description of embodiments, the same reference numerals are used for details of the same type. The described embodiments can be combined, and different details from the various embodiments can be combined into further embodiments within the scope of the patent claims.

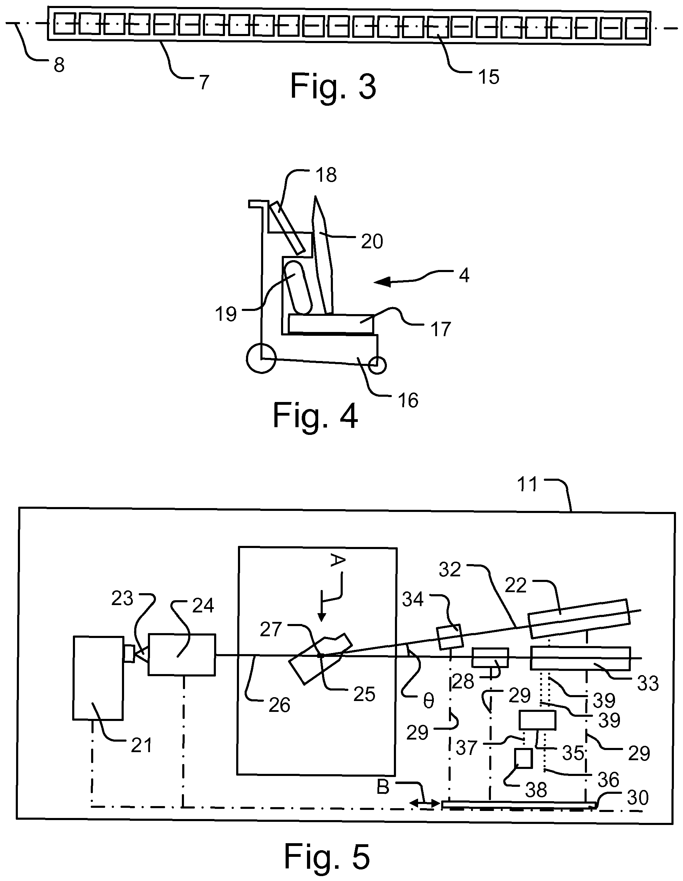

The first stage module 3 has at least one X-ray source 6 and at least three first detectors 7 for conducting transmission contrast radiography. The individual first detector is line-shaped along a longitudinal axis 8 (cf. Fig. 3). The X-ray source 6 is located to emit an X-ray beam from one side of a scanning volume in the first stage module towards an associated line-shaped first detector located at the opposite side of the scanning volume. When a group of carry-on items on the one hand and X-ray source and associated first detector on the other hand are moved in relation to one another, and the X-ray beam illuminates the group of carry-on items and passes on to the first detector, then the image data detected by the first detector are sampled with a frequency that permits acquisition of a complete two-dimensional image of the group of carry-on items. The sampling frequency is preferably so that from one sampling to the next the group of carry-on items has shifted a distance corresponding to the width of the first detector in the direction of movement. The sampling frequency may also be higher, and then the image data handling may make adjustment to take into account that the same position within the group of carry-on items has been sampled more than once by the same first detector.

The at least three first detectors 7 have their longitudinal axes 8 oriented in mutually different orientations in space. The image data detected by one of the first detectors will consequently represent a slice through the group of carry-on items in a direction that is different from the corresponding directions of the at least two other first detectors. The at least three first detectors will thus provide at least three image data of every position within the group of carry-on items. The image data represent the attenuation of the X-rays during passing through the group of carry-on items. In most cases the individual items in the group overlap in the direction of the x-ray beam, and the resulting attenuation is caused by attenuation in the various overlapping materials. However, as the first detectors are oriented in mutually different orientations, the image data analysis can determine the type of material in a particular volume within the group of carry-on items.

The X-ray source 6 emits the X-ray beam from a beam opening. The beam opening is in one embodiment shaped to emit the X-ray beam as a fan shaped beam with such a large opening angle that the fan beam illuminates completely the group of carry-on items in the direction given by the orientation of the associated line-shaped first detector and the location of the source and this first detector. The X-ray source may also be arranged as an array of beam openings so that the resulting beam is sheet-like. In an embodiment the first stage module has a single X-ray source that supplies a plurality of beam openings. In another embodiment the first stage module has several X-ray sources, such as one X-ray source for each first detector.

In Fig. 2 three first detectors 6 are arranged in the first stage module. At the right hand side one first detector is located below the scanning volume and oriented with the longitudinal axis in horizontal direction and about perpendicular to a direction of travel A, and with the associated beam opening of the X-ray source 6 located above the scanning volume. A second of the three first detectors is located to one side of the scanning volume and extends in the vertical direction, and the beam opening of the associated X-ray source 6 located to the opposite side of the scanning volume. A third of the three first detectors is located at the side of the scanning volume and extends in an oblique direction, and the beam opening of the associated X-ray source 6 is located at the opposite side of the scanning volume. In another embodiment there are more than three first detectors and associated beam openings, such as 9 first detectors.

The first detectors are operationally connected with at least one processing unit in a processing device 9 that reconstruct a 3D (three-dimensional) representation of the scanned group of carry-on items based on the sampled 2D (two-dimensional) projections. At each sampling a 2D projection containing image data is obtained from each of the first detectors. The geometry of the first detectors and X-ray sources are known and stored in the processing device together with algorithms used to reconstruct the 3D representation.

The 3D representation is divided into voxels. A voxel is a volume of predefined length, height and width, and image data from each detector are associated with the voxels. For a particular voxel the association can be illustrated by imagining a straight line from the X-ray source through the voxel to a point on the associated first detector, and the image data sampled at this point on the first detector is associated with the voxel. There will be as many such lines as there are first detectors, so the individual voxel is associated with a set of image data holding information on the X-ray attenuation in the directions of the lines.

The processing device may include a library of characteristic content items of carry-on type, and for each content item there can be information of typical materials, and optionally also of typical shapes and typical sizes. A book is of particular materials and has typical sizes and characteristics, different from a pair of socks. The number of unique types of carry-on items is not that large. A library of e.g. 1000 different types will cover almost any content item in an actual carry-on item. A library of 100 different materials or 500 different types will cover a large percentage of all carry-on items in e.g. an airport. The library may also have entries for characteristic items of carry-on type, such as an umbrella, a bag, a purse, etc.

The processing device may include a library of characteristic materials in carry-on items. These materials are known safe materials. A library of e.g. 1000 different types of materials cover almost any content item in an actual carry-on item, and a library of 100 different materials, or 300 different materials, will cover a large percentage of all materials in carry-on items in e.g. an airport. Each entry of a material in the library is associated with data for X-ray attenuation in the material, and this attenuation includes at least two values representing attenuation at different energy levels for the X-rays.

The processing device may include a library of characteristic restricted materials, such as explosives, poisons, highly toxic materials, highly flammable materials etc. These materials are known restricted materials. A library of e.g. 1000 or 500 different types of restricted materials provide high reliability of detection of any restricted material. A library of 100 or 300 different materials will assist in covering a large percentage of all materials in carry-on items in e.g. an airport. Each entry of a material in the library is associated with data for X-ray attenuation in the material, and this attenuation includes at least two values representing attenuation at different energy levels of the X-rays.

The first detectors 7 are energy resolvable detectors, and may detect at least two values at the same time, where the individual value is associated with an energy level or energy range of the detected photon. This may assist in determining the materials in the carry-on items. The individual first detector is line-shaped and may include an array of subunits forming together the detector. In Fig. 3 such an array of subunits 15 is illustrated. The subunits are illustrated with a little free distance between the subunits for ease of illustration, but in reality the subunits form a continuous detector surface. On one embodiment the energy resolvability of the first detector is better than 3 percent of the energy level of the detected X-rays. In another embodiment the first detector is able to differentiate the photons in 128 different energy levels.

The 2D image data captured by the first detector are transmitted to the processing device 9 and stored and utilized in the reconstruction of the 3D representation and may also be used in characterization of the materials of the voxels in the model. The 3D representation allows to analyze the carry-on items and to identify the individual items that overlap one another in the projections captured as 2D image data. An accurate 3D representation can be based on in the range of from 3 to 30 projections, preferably from 3 to 20 projections of 2D image data. The 2D image data may typically have a resolution in the range of 1000 times 1000 pixels for a given volume. A similar resolution in 3D would hold 1000 times more voxels, and would traditionally involve 1000 projections of 2D image data. The 3D reconstruction based on up to 20 projections, or up to 30 projections, utilizes identification of the outer extent of the individual carry-on items. This can be based on the library of characteristic items, or surface reconstruction, or it can be based on images taken by 3D depth cameras before the group of carry-on items on the carrier enters the scanning volume, or the cameras can be mounted within the first stage module and photograph the group of carry-on items while they are X-ray scanned.

A further aid in the 3D reconstruction is to assume only positive attenuation in the materials, and thus no generation of X-rays in the material.

A further aid in the 3D reconstruction is to assume that the individual content item has constant properties without density gradients in the material.

A further aid in the 3D reconstruction is to analyze the individual projection of 2D image data to determine boundaries between areas of different materials composition. Such a segmentation of the 2D projections assists in the determination of the outer shapes of carry-on items and content items therein.

The 3D reconstruction may be analyzed to determine boundaries between areas of different materials composition, and this may involve segmentation.

The voxels in the 3D representation are categorized as to the material. In this categorization two or three categories are used, namely known restricted materials, and known safe materials, and optionally the category unknown safe materials may also be used. The individual categorization is associated with an estimated value of accuracy. The value of accuracy may be 100 if the determination is absolute and without uncertainty, and the value of accuracy may be 0 if the determination is completely uncertain.

A pre-defined first threshold value may be used. If the accuracy value associated with a voxel categorized as a known restricted materials or known safe materials is below the first threshold value then it is decided that further analysis of the volume containing the voxel is required in order to resolve the uncertainty. On the other hand, if the estimated value of accuracy is above the first threshold value, then the category is accepted.

A pre-defined second threshold value may be used in connection with the unknown materials. The second threshold value is preferably higher than the first threshold value. The pre-defined first threshold value and/or the pre-defined second threshold value may be adjustable, so that if a temporary security problem arises, which requires a higher level of security, then the threshold values are adjusted accordingly. It may also be needed to adjust the values based on gathering of data during operation.

In case the analysis of the voxels, or segmentated areas or volumes, results in that there are only known safe materials with the required accuracy in the determination, then the carrier with the group of carry-on items is shifted to release station 5 where the person or passenger can recollect the items and move on. However, if there is at least one voxel, or segmentated area or volume, that requires further scanning then the carrier with the group of carry-on items is shifted to a second stage module 11 by a shifting device 13. In case the analysis results in that there is a known restricted material with the required accuracy in the determination, then the carrier with the group of carry-on items is directed to a keeping station 12 by the shifting device 13. In the keeping station security personnel may conduct an additional manual search and/or take appropriate action on the findings.

The second stage module has at least one X-ray source 21 and at least one second detector 22. Because only a fraction of all the groups of carry-on items requires scanning in the second stage module 11, the scanning therein has more time at hand and can be more specific. The scanning in the second stage module includes a diffraction based scanning where the direction of propagation of the photon is modified by interaction with the material in the local area, but the kinetic energy of the photon is conserved. The diffraction scanning may also be an inelastic scattering where the incident photon changes kinetic energy at scattering. The scanning in the second stage module is only performed in a small volume coinciding with a local area 23 requiring further scanning, or in several such small volumes in case the group of carry-on items has more than one local area 23 requiring further scanning.

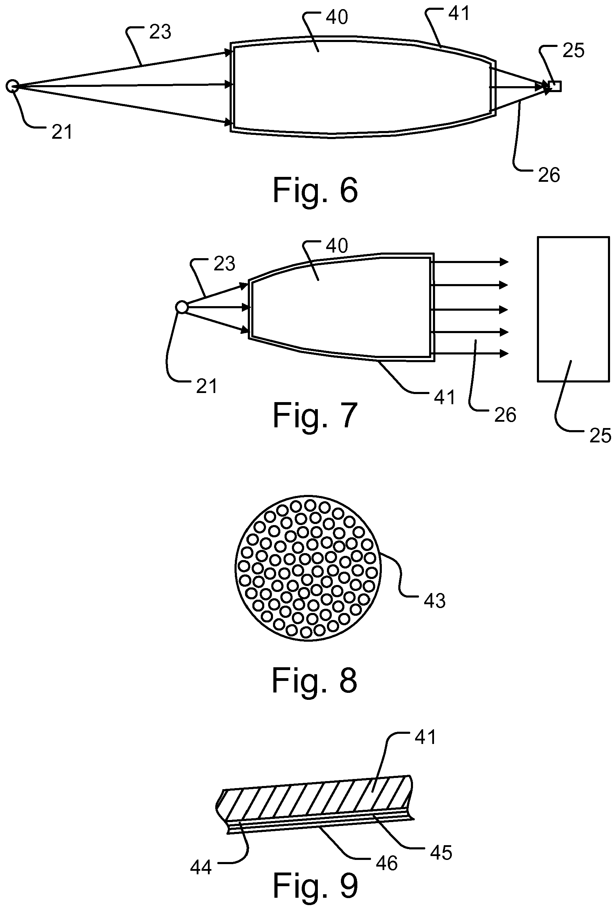

The X-ray source 21 emits a polychromatic X-ray beam in a divergent shape 23, viewed as a fan-shape in Fig. 5, and a focusing device 24 focuses photons in the beam towards a measuring position 25, see Figs. 6, 7 and 12. The focusing device emits a focused X-ray beam 26 to the measuring position 25.

The group of carry-on items enters the second stage module 11 and travels in direction of arrow A. The scanning in the second stage module can be initiated in several different manners, that all perform a mutual positioning of the group of carry-on items and X-ray source 21 and the focusing device 24 so that measuring position 25 is in line with the local area 27 requiring further scanning.

In one embodiment the group of carry-on items is movable, and the transporting mechanism in the second stage module moves the group of carry-on items in the direction of travel and in the direction of height and possibly also in direction towards and away from the X-ray source so that the measuring position 25 is in line with the local area 27 requiring further scanning.

In another embodiment the group of carry-on items is moved by the transporting mechanism in the second stage module in the direction of travel A, and is stopped in the position where the focused X-ray beam 26 passes through a vertical plane through the local area 27 requiring further scanning. The X-ray source 21 and the focusing device 24 are moved in the direction of height to the position where the focussed beam and thus the measuring position 25 is in line with and thus passes through the local area 27 requiring further scanning.

In a further development, the second detector and a first collimator 28 are fixed by stiffeners 29 to a platform 30, and the platform is movable in direction towards and away from the X-ray source as indicated by arrows B which is transverse to the transport direction A. A structure 31 carries X-ray source 21 and focusing device 24 and platform 30 so that they are movable in unison in the direction of height.

In another embodiment the group of carry-on items is moved by the transporting mechanism in the direction of travel A, and the X-ray source 21, the focusing device 24 and the second detector 22 are moved in the direction of height to the position where the focussed beam and thus the measuring position 25 is in line with and passes through the local area 27 requiring further scanning, and furthermore they are moved to follow the movement of the group of carry-on items in the direction of travel A during the scanning so that the focussed beam passes through the local area 27 during the scanning. This embodiment is in particular suited for scanning when the group of carry-on items only has a single local area requiring further scanning.

In another embodiment the group of carry-on items is moved by the transporting mechanism in the second stage module in the direction of travel A, and is stopped to a stationary position within the second stage module. The X-ray source 21 and the focusing device 24 and possibly the second detector, if required, are moved to the position where the focussed beam and thus the measuring position 25 is in line with and passes through the local area 27 requiring further scanning. This embodiment is in particular suited for scanning when the group of carry-on items has several local areas requiring further scanning, because the position is stationary as long as it takes to scan the local areas.

The second detector can have a large detector area and be mounted at a fixed position, or the second detector can be movably mounted, for example as illustrated in Fig. 5. When the detector is movable in the direction of height, and possibly also in direction of arrows B, the size of the detector area can be smaller, as the detector is positioned along a diffraction path 32, which is line-shaped and originates at measuring position 25 and forms an angle 8 with the direct beam path of the focused X-ray beam 26. The angle θ can e.g. be 15°, however a small angle in the range of 2° to 7° is preferred, suitably in the range of 3° to 5° when the embodiment also comprises an third detector 33 located in the direct beam path of the focused X-ray beam 26. The third detector is optional, but can be applied to all embodiments. The third detector provides the advantage that the attenuation of the direct beam is detected, which attenuation is caused by passing through the various items in the group of carry-on items, and when the angle θ is small, then it is a suitable assumption that the diffracted signal has passed through similar materials, and the attenuations detected by the third detector can thus be applied to correct the detected diffraction signal for attenuation and obtain a more precise recording of the actual diffraction signal. In case the second detector and the third detector detect an energy spectrum, the energy spectrum acquired on the third detector from the direct beam can be used to correct the diffraction spectra detected by the second detector for energy dependent attenuation. These embodiments can be applied to all other embodiments of the present invention.

In an embodiment the third detector is associated with a second collimator 34. The second collimator is a pinhole collimator made of a material and dimensions providing strong attenuation of X-rays and having a central bore of typically a smaller diameter than the diameter of the focused X-ray beam 26 at the exit opening of the focusing device 24. In the case of a 1 mm beam diameter at the exit opening, the central bore may typically have a pinhole of a diameter of about 0.1 mm in diameter. By using a smaller pinhole, saturation of the third detector is avoided. The effect of the second collimator is to shield the third detector from X-rays other than those in the direct beam. This embodiment can be applied to all embodiments of the present invention. The second collimator and the third detector are connected by stiffeners 29 to platform 30 or to structure 31 or mounted in another manner.

A second processing device 35 controls the positioning of one or more of X-ray source 21, the transporting mechanism in the second stage module, focusing device 24, first collimator 28, platform 30, third detector 33 and second collimator. The second processing device receives data from processing device 9 associated with the first stage module. The data identify the local area 27 or the local areas 27 requiring further scanning, at least with respect to the position of the local area(s) within the group of carry-on items, and possibly also with further information detected in the first stage module, such as whether material in the local area 27 is of a solid material or of a fluid material, like a liquid, a gel or a gas, e.g. an aerosol. For a given volume at a local area requiring further scanning and a given scanning period, less diffraction signals can be expected when the material is of a fluid material than when it is of a solid material. The further information thus allows adaptation of the scanning in the second module to one or the other type, and to save time and only spend the period actually required for the scanning. One adaptation is to increase the width of the focused X-ray beam 26 when the volume contains a liquid. The second stage module can also comprise duplicate or triple sets of equipment like the single set illustrated in Fig. 5, where one set provides a focused X-ray beam of narrow width for use with solids and another set provides a focused X-ray beam of larger width for use with liquids. The second processing device then controls the relevant set to be positioned to direct the relevant X-ray beam to the local area to be further scanned. If more than one local area is to be scanned, then the second processing device controls several sets to be positioned and scan in parallel.

The second processing device 35 is connected with the processing device 9 via a first signal line 36, and via one or more second signal lines 37 to one or more actuators 38 for adjusting the positions of the above-mentioned parts in the individual set of equipment in the second stage module. Via one or more third signal lines 39 the second processing device 35 receives data from the second detector and possibly also from the third detector. Processing device 9 and second processing device 35 can be integrated into a single device or can be divided into more processing devices, as is most convenient in the embodiment at hand.

The first collimator 28 is made of a material and dimensions providing strong attenuation of X-rays and has a passage allowing free passing of diffraction path 32. The passage can be part circular-shaped where the radius of the circle corresponds to the distance from the passage to the direct path of the focused X-ray beam 26 or it can be a pinhole or a path of square cross-section or of another shape. The passage is preferably of rectangular shape in order to achieve a short intersection between the central beam and the diffracted beam, and for small diffraction angles, a rectangular shape of e.g. 1 mm x 3 mm can be suitable. The effect of the second collimator is to shield the second detector from X-rays other than those occurring in the selected diffraction path. This shielding improves the signal-to-noise ratio and thus allows more precise detection in shorter time. As an example, the shielding may allow detection of e.g. 1000 diffracted photons and 3 photons caused by other events than diffraction along the selected diffraction path 32. Without the shielding it is likely that one photon out of three is caused by other events. This embodiment can be applied to all other embodiments of the present invention.

The focusing device 24 can in one embodiment comprise a set of mirrors that capture the divergent polychromatic beam from X-ray source 21 and focus the beam into X-ray beam 26. However, mirrors do have the disadvantage of taking up much space, and the outer dimensions of the second stage module are quite large when mirrors are employed. In another embodiment the focusing device 24 comprises a tube-shaped member 40 having a wall 41 of tubular shape and a central passage 42. The shape of the wall is of elliptical shape in cross-section with the one focus point located at X-ray source 21 and another focus point located at the measuring position 25. Photons in the divergent shape 23 of the beam at the exit opening of X-ray source 21 are thus received in the tube-shaped member 40 and reflected on the inside of wall 41 and exits the tube-shaped member as a focused X-ray beam directed towards measuring position 25, as illustrated in Fig. 6. When this embodiment of the focussing device 24 is applied it is preferred that the X-ray source and the focusing device are movable in direction of arrows B or that the group of carry-on items is movable in this direction in relation to the focusing device so that the measuring position 25 is located within the local area 27 during scanning.

In another embodiment, illustrated in Fig. 7, the tube-shaped member 40 has a wall 41 of parabolic shape in cross-section with a focus point located at X-ray source 21. Photons in the divergent shape 23 of the beam at the exit opening of X-ray source 21 are thus received in the tube-shaped member 40 and reflected on the inside of wall 41 and focused into a parallel focused X-ray beam 26 directed towards measuring position 25. In this embodiment of the focusing device 24 the flux density of photons are more or less constant in increasing distances from the focusing device 24, and X-ray source and the focusing device need not be movable in direction of arrows B.

In an embodiment a plurality of tube-shaped members 40 are included in the focusing device 24. In this manner large portions of the divergent X-ray beam from X-ray source 21 are concentrated in the focusing device into the focused X-ray beam 26, and this increases the photon flux density in beam 26 and decreases the duration required for scanning a local area 27. In a further embodiment the focusing device comprises a polycapillary element 43, illustrated in Fig. 8 in an end view. The tube-shaped members are formed as channels in the solid material of element 43. The polycapillary element 43 allows to locate many channels in a very compact structure, and consequently a high degree of capture of the photons in the divergent X-ray beam from the X-ray source can be obtained.

The inside surface of the tube-shaped member or the capillary in the polycapillary element is in an embodiment surface coated. The surface coating can include a material having a density of at least 10 g/cm³. The surface coating is provided to increase the proportion of photons that are reflected when meeting the surface. The critical angle for reflection of photons practically without any loss in flux depends on the energy of the X-rays and the material density of the encountered surface, and the increase in density of the material at the surface thus results in a higher flux density in the focused X-ray beam 26. In an embodiment the surface coating includes a material having a density of at least 16 g/cm³.

In a further embodiment the at least one tube-shaped member is surface coated with at least one material, or a mixture of materials, selected from the group comprising gold, platinum, iridium, tungsten, silver, palladium, rhodium, ruthenium and molybdenum.

In a further development of these embodiments the at least one tube-shaped member is surface coated with a multilayer coating comprising at least one layer of a material having a density of at the most 4 g/cm³. Alternating coating layers of high density and low density can increase the resulting reflectivity in certain bandwidths of X-rays, and as the X-ray source 21 emits a polychromatic beam providing a certain bandwidths of X-rays the photon flux density in the focused X-ray beam 26 can be increased by the multilayer coating. In Fig. 9 an example of a three layered coating is illustrated where an inner coating layer 44 is of a material having a density of at least 16 g/cm³, a middle coating layer is of a material having a density of at most 4 g/cm³ and an outer coating layer 46 is of a material having a density of at least 10 g/cm³. The low density materials can e.g. be selected from the group comprising silicon, boron carbide and carbon.

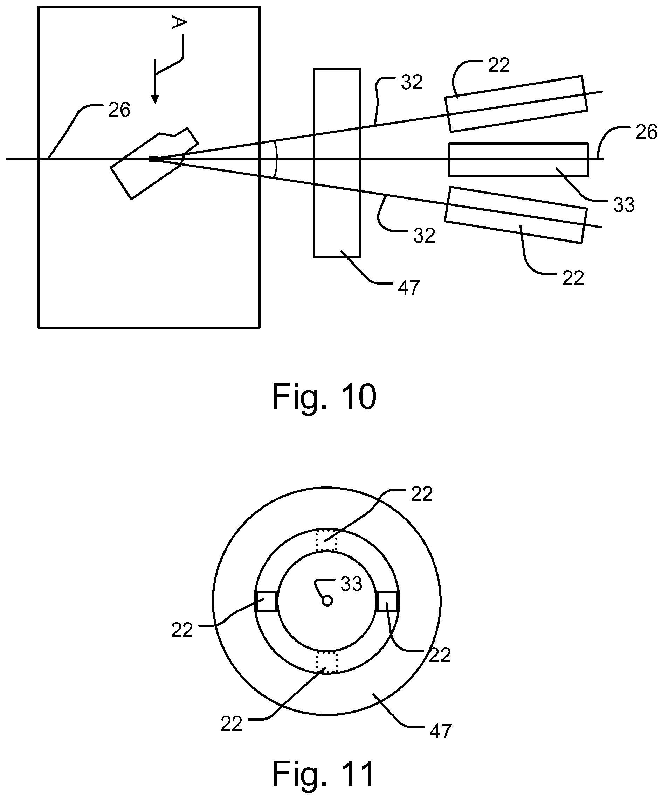

An additional manner of shortening the duration of the scanning in the second stage module is to increase the area of the second detector so that more diffracted photons are detected. In the embodiment illustrated in Fig. 10 two second detectors 22 are utilized in a horizontally symmetric arrangement about the third detector 33. The first and second collimators have been combined into a common collimator 47 provided with both a central pinhole and a passage for each of the diffraction paths to the second detectors. Fig. 11 illustrates the arrangement seen in direction of the direct beam path. The passage for the diffraction paths has annular or part-annular shape. There can be more than two second detectors, such as two additional second detectors marked in broken lines or even more second detectors.

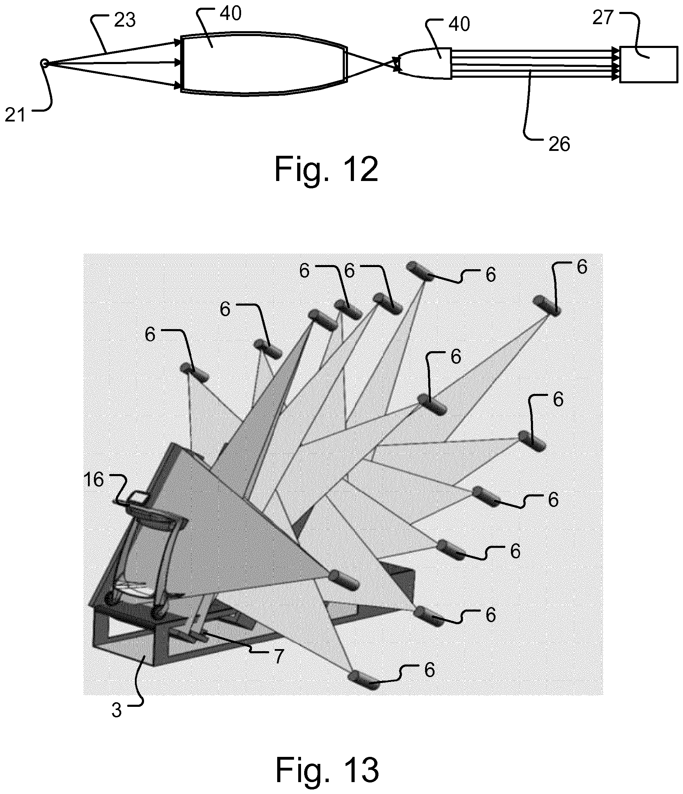

Fig. 12 illustrates a further embodiment of the focusing device, in which a tube-shaped member having a wall of elliptical shape is associated with a tube-shaped member having a wall of parabolic shape, where the latter member is located at a slightly larger distance from the former member that the second focusing point so that the resulting parallel focused X-ray beam 26 has a very small width and a very high photon flux density.

The X-ray source in the second stage module has in an embodiment a nominal tube voltage of at least 110 kV. As an example the X-ray source can be of the mark Varian and the type NDI/160-22 having a nominal tube voltage of 160 kV. The X-ray source in the second stage module preferably has a non-rotating anode and is preferably air-cooled.

The focussed X-ray beam 26 at the measuring position can have a largest cross-sectional dimension e.g. in the range of from 4 µm to 500 µm. Larger cross-sectional dimensions are also possible, such as in the range from 0.5 mm to 5 mm. The larger dimensions can be suitable for acquisition in connection with liquid materials.

The second detectors are operationally connected with a processing unit in the processing device 9 or in the second processing device 35, and based on the information obtained in the second stage scanning the processing device determines whether the material in the voxel or local area 27 is safe or restricted. If it is safe, then the carrier with the group of carry-on items is shifted to release station 5. If it is restricted, then the carrier with the group of carry-on items is shifted to keeping station 12. In the exceptional case that the category of the local area 27 still remains undecided, then the carrier with the carry-on items is shifted to a manual inspection station 14.

An embodiment of the second stage module 11 illustrated in Fig. 5 has at least one X-ray source 21 and at least one second detector 22. The scanning in the second stage module includes a diffraction scanning, and it can be an elastic scattering based scanning or an inelastic scattering. The scanning in the second stage module is only performed in a small volume coinciding with a local area 27 requiring further scanning, or in several such small volumes in case the group of carry-on items has more than one local area requiring further scanning.

The X-ray source 21 emits a polychromatic X-ray beam in a divergent shape 23, viewed as a fan-shape in Fig. 5, and a focusing device 24 focuses photons in the beam towards a measuring position 25. The focusing device emits a focused X-ray beam 26 to the measuring position 25. In another embodiment a pinhole collimator is utilized instead of focusing device 24.

The group of carry-on items enters the second stage module 11 and travels in direction of arrow A. The scanning in the second stage module is initiated in a manner, so that the group of carry-on items and X-ray source 21 and the focusing device 24 and second detector are mutually positioned so that measuring position 25 is in line with the local area 27 requiring further scanning.

In an embodiment the second detector and a first collimator 28 are fixed by stiffeners 29 to a platform 30, and the platform is movable in direction towards and away from the X-ray source as indicated by arrows B which is transverse to the transport direction A. A structure 31 carries X-ray source 21 and focusing device 24 and platform 30 so that they are movable in unison in the direction of height.

The second detector is positioned along a diffraction path 32, which is line-shaped and originates at measuring position 25 and forms an angle θ with the direct beam path of the focused X-ray beam 26. The angle θ can e.g. be 15°, however a small angle in the range of 2° to 7° is preferred, suitably in the range of 3° to 5°, or 3° to 6°, and the embodiment may also comprise a third detector 33 located in the direct beam path of the focused X-ray beam 26. The third detector is optional, but can be applied to all embodiments of the second stage module. The third detector provides the advantage that the attenuation of the direct beam is detected, which attenuation is caused by passing through the various items in the group of carry-on items, and when the angle θ is small, then it is a suitable assumption that the diffracted signal has passed through similar materials, and the attenuations detected by the third detector can thus be applied to correct the detected diffraction signal for attenuation and to obtain a more precise recording of the actual diffraction signal. In case the second detector and the third detector detect an energy spectrum, the energy spectrum acquired on the third detector from the direct beam can be used to correct the diffraction spectra detected by the second detector for energy dependent attenuation. The distance between the X-ray source 21 and the second detectors and third detector is sufficiently large to allow the group of carry-on items to pass through the second detector, such as a distance of at least 0.7 m, and possibly a distance in the range from 0.8 m to 1.5 m.

In an embodiment the third detector is associated with a second collimator 34. The second collimator is a pinhole collimator made of a material and dimensions providing strong attenuation of X-rays and having a central bore of typically a smaller diameter than the diameter of the focused X-ray beam 26 at the exit opening of the focusing device 24. In the case of a 1 mm beam diameter at the exit opening, the central bore may typically have a pinhole of a diameter of about 0.1 mm in diameter. By using a smaller pinhole, saturation of the third detector is avoided. The effect of the second collimator is to shield the third detector from X-rays other than those in the direct beam.

A second processing device 35 controls the positioning of one or more of X-ray source 21, the transporting mechanism in the second stage module, focusing device 24, first collimator 28, platform 30, third detector 33 and second collimator. The second processing device received data from processing device 9 associated with the first stage module. The data identify the local area 27 or the local areas 27 requiring further scanning, at least with respect to the position of the local area(s) within the group of carry-on items, and possibly also with further information detected in the first stage module, such as whether material in the local area 27 is of a solid material or of a fluid material, like a liquid, a gel or a gas, e.g. an aerosol. For a given volume at a local area requiring further scanning and a given scanning period, less diffraction signals can be expected when the material is of a fluid material than when it is of a solid material. The further information thus allows adaptation of the scanning in the second module to one or the other type, and to save time and only spend the period actually required for the scanning. One adaptation is to increase the width of the focused X-ray beam 26 when the volume contains a liquid.

The second processing device 35 is connected with the processing device 9 via a first signal line 36, and via one or more second signal lines 37 to one or more actuators 38 for adjusting the positions of the above-mentioned parts in the individual set of equipment in the second stage module. Via one or more third signal lines 39 the second processing device 35 receives data from the second detector and possibly also from the third detector. Processing device 9 and second processing device 35 can be integrated into a single device or can be divided into more processing devices, as is most convenient in the embodiment at hand.

The first collimator 28 is made of a material and dimensions providing strong attenuation of X-rays and has a passage allowing free passing of diffraction path 32. The passage can be part circular-shaped where the radius of the circle corresponds to the distance from the passage to the direct path of the focused X-ray beam 26 or it can be a pinhole or a path of square cross-section or of another shape. The passage is preferably of rectangular shape in order to achieve a short intersection between the central beam and the diffracted beam, and for small diffraction angles, a rectangular shape of e.g. 1 mm x 3 mm can be suitable. The effect of the second collimator is to shield the second detector from X-rays other than those occurring in the selected diffraction path. This shielding improves the signal-to-noise ratio and thus allows more precise detection in shorter time.

The focusing device 24 can in one embodiment comprise a set of mirrors that capture the divergent polychromatic beam from X-ray source 21 and focus the beam into X-ray beam 26. In another embodiment the focusing device 24 comprises a tube-shaped member having a wall of tubular shape and a central passage. The shape of the wall is of elliptical shape in cross-section with the one focus point located at X-ray source 21 and another focus point located at the measuring position 25. Photons exit the tube-shaped member as a focused X-ray beam directed towards measuring position 25. In another embodiment the tube-shaped member has a wall of parabolic shape in cross-section with a focus point located at X-ray source 21. Photons in the divergent shape 23 of the beam at the exit opening of X-ray source 21 are received in the tube-shaped member and focused into a parallel focused X-ray beam 26 directed towards measuring position 25.

Processing device 35 may include a library of characteristic materials, like what has been described in the above in relation to evaluation of the detection in the first stage module. A library of e.g. 1000 different types of materials cover almost any content item in an actual carry-on item, and a library of 100 different materials, or 300 different materials, will cover a large percentage of all materials in carry-on items in e.g. an airport. Each entry of a material in the library can be associated with data for X-ray attenuation in the material, and this attenuation includes at least two values representing attenuation at different energy levels for the X-rays. The processing device may also include a library of characteristic restricted materials, such as explosives, poisons, highly toxic materials, highly flammable materials etc. These materials are known restricted materials. A library of e.g. 1000 or 500 different types of restricted materials provide high reliability of detection of any restricted material. A library of 100 or 300 different materials will assist in covering a large percentage of all materials in carry-on items in e.g. an airport. Each entry of a material in the library can be associated with data for X-ray scattering spectra of the material, and these spectra includes at least two values representing scattering at different energy levels of the X-rays for a specific scattering path 32.

The second detector, and preferably also the third detector, has energy resolution and is thus capable of detecting an energy spectrum of photons. In one embodiment the energy resolvability of the first detector is better than 3 percent of the energy level of the detected X-rays, such as better than 0.8 percent of the energy level. In a further or alternative embodiment the energy resolvability of the detector is able to differentiate the photons in a plurality of energy levels, such as the acquisition by typically 1000 to 4000 channels binned to 128 channels (128 different energy levels) to reduce noise. Examples of detector materials suitable for energy dispersive detection of X-rays are cadmium zinc telluride (CdZnTe) or cadmium telluride (CdTe) materials or high purity germanium (HPGe) materials. One example of a detector is the model XR-100T-CdTe from Amptec Inc., Bedford, MA, U.S.A.

The at least dual energy resolution of the second detector provides information as to the nature of the materials in the carry-on items and allows improved determination of whether the material is categorized into restricted materials or safe materials.

A carrier in form of a cart 16 is illustrated in Fig. 4, and the carrier carries a group 4 of carry-on items. In the illustrated example the group is composed of a briefcase 17, a computer case 18, a shopping bag 19, and a coat 20.

The first detectors 7 in the first stage module may have a length of at least 100 cm, and a length of 130 cm or 150 cm will be suitable in many embodiments. It is, however, also possible to use first detectors 7 of shorter length than 100 cm, such as a length of 90 cm.

In the embodiment of the first stage module illustrated in Fig. 13, the cart 16 is translated horizontally along an intermediate floor and some of the first detectors are located below the floor. There are 14 pairs of one X-ray source and one first line detector. The first two pairs are arranged near the cart inlet in an orthogonal manner (90 degrees angle between the line detectors) and they are used to provide a high resolution image for an operator, but not used for reconstruction and analyzing. The following 12 pairs of one X-ray source 6 and one first line detector 7 are providing images for reconstruction and analyzing. These 12 pairs are arranged distributed along a half circle, preferably evenly distributed along the half circle around the path of movement of the group of carry-on items on the cart in the direction of travel A.

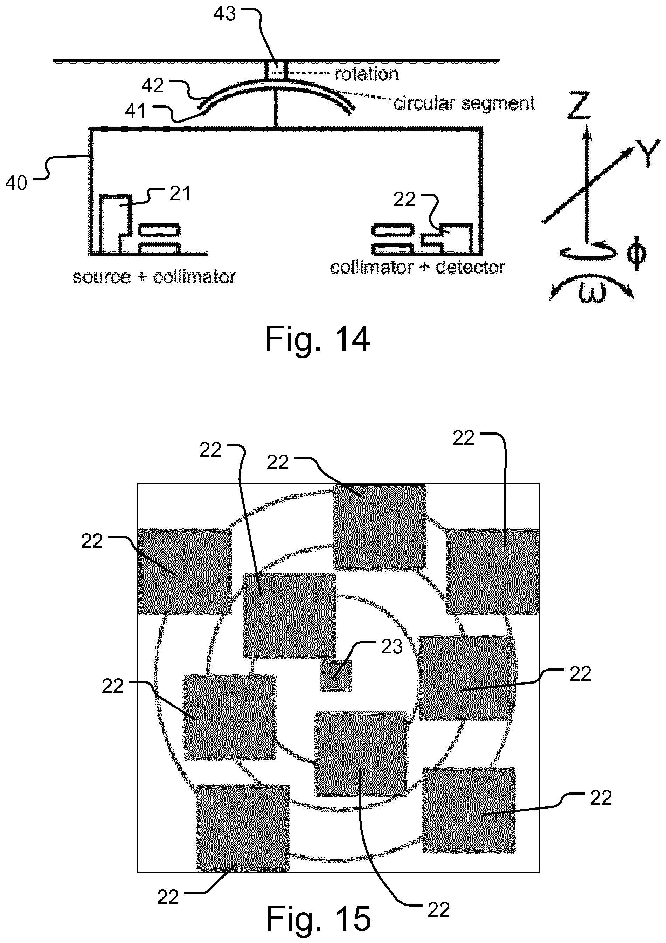

In an embodiment of the second stage module a rotation of at least 10° is effected of the X-ray source and the at least one second detector in relation to the group of carry-on items. The X-ray source 21 and collimator on one side of the path of movement of the group of carry-on items and the collimator and second detector(s) 22 and optionally the third detector 23 on the other side of the path are mounted in a common rigid frame structure 40, as is illustrated in Fig. 14. The frame structure 40 is mounted with a possibility for rotation in directions indicated by ϕ about axis Z, which may be vertical, and optionally also with a possibility for rotation in directions indicated by ω about axis Y. Axis Y is preferably orthogonal to axis Z. Axis Y may be horizontal. Rotation about axis Y can be performed by mounting the rigid frame structure 40 to a first part 41 shaped as a circular segment, like a bearing, which first part may slide in a second part 42 shaped correspondingly as a circular segment. The second part 42 may be mounted on a shaft 43 which may be rotated about its longitudinal axis coinciding with axis Z. The rotational movements may be driven by drive units, not shown, controlled by one or more processing devices, such as by processing device 35. The rotation is utilized to ensure full checking of crystalline or semi-crystalline materials. The size of the rotation is preferably of at least 10° in one direction and at least 10° in the opposite direction, in an oscillating manner.

In an embodiment illustrated in Fig. 15 the second stage module has a plurality of second detectors 22 arranged around the central beam. A third detector 23 is located in the direct beam path. The individual circle in Fig. 15 is at a specific angle to the direct beam. Some of the second detectors 22 are arranged on the same circle, but at different circumferential locations on the circle. By arranging several second detectors at different circumferential locations on a circle (at different azimuthal angles in relation to the direct X-ray beam) the paths of the diffrated X-rays from the area or origin of the diffraction to the second detectors pass through different volumes of the group of carry-on items.

The reconstruction may for instance be provided using an ART algorithm coupled with a de-noising scheme total variation minimization, a method called Adaptive Stepeest Descent - Projection on Convex Sets (ASD-POCS). The method is described in general in the reference Sidky, Emil Y., and Xiaochuan Pan. "Image reconstruction in circular cone-beam computed tomography by constrained, total-variation minimization." Physics in medicine and biology 53.17 (2008): 4777. The present TV implementation, as well as inclusions of a priori knowledge about materials in carry-on items, enables solving of the correlation between the number of rays and the number of voxels. Total variation penalizes variation between neighbor pixels in the cost function of the algorithm. An example of a priori knowledge is the condition of a positive attenuation for all materials in the carry-on items.

The reconstruction is performed on a number of energy channels (for instance a detector energy resolution of about 6 keV may limit the number of channels to 32 independent channels in the range 20-160 keV). In a preferred embodiment 3 to 4 channels is considered sufficient and this allows for fast performance in the reconstructions on a single data processing system, which may be a multi-CPU multi-core system. A computer program product can comprise program code means adapted to cause the data processing system to perform the steps of reconstruction of the three-dimensional representation of the group of carry-on items, when said program code means are executed on the data processing system.

The computer program product can comprise program code means adapted to cause the data processing system to perform the steps of determining whether a region of the three-dimensional representation of the group of carry-on items contains a threat by comparing an attenuation profile of the region with a stored threat database of attenuation profiles, when said program code means are executed on the data processing system.

The computer program product may furthermore comprise a non-transitory computer-readable medium having stored thereon the program code means and the threat database.

It is possible to simplify the calculations performed by the program code by using a segmentation algorithm. The program code means may thus further be adapted to cause the data processing system to perform the steps of intensity based segmentation of the three-dimensional representation of the group of carry-on items.

An example of this is described in more detail in the following. This algorithm1 estimates homogenous 3D regions of neighboring pixel intensities. This corresponds to finding image regions with intensities suggesting the same material (water, aluminum or other chemical compositions). The outcome of the first step will be a 3D label image where different labels correspond to different attenuation and/or different material.

Any label regions with an attenuation profile similar to a threat database item will be passed either to scanner module two or to algorithm2. The algorithm1 uses the following assumptions: a) each image contains a set of approximately homogeneous color-intensity/attenuation regions, b) color-intensity information of a region can be quantified by a single of a few multi-channel attenuations, c) two neighboring regions of different material have different attenuation with a low within region attenuation variation. The main steps of algorithm1 working under these assumptions are: 1. Unsupervised color quantification (k-means), 2. Find labels of neighboring regions, 3. Region merging (merge similar regions if difference calculated from squared sum difference (SSD) is less than a predetermined threshold), 4. Region merging (merge if region size is smaller than a predetermined threshold size), 5. Interior point identification (prevent potential partial volume effects), 6. Classification of regions as threat or non-threat.

### Step 1. Unsupervised color quantification (K-means)

The K-means algorithm is run to perform intensity based segmentation of a 3D image based on one or more energy channels. As a result of K-means, the image will be segmented into K=25 different labels corresponding to different types of material. However, these materials are generally at spatially different positions and therefore re-labeling is performed on the regions that are positioned spatially different. It is apparent that some of the regions have been segmented into several regions and for this reason, region merging is needed. Since there are a limited number of materials in the world, K need not be much larger than 25. The value may be set also based on experience obtained during scanning.

### Step 2. Find labels of neighboring regions

To do region merging the computer receives information on which regions are neighbors with respect to each other. This is found out by iterating across all isolated regions and identifying which surrounding region labels are on the dilated edge of a considered region. This information is saved in a region connectivity matrix C used to determine which regions can be merged in later steps.

### Step 3. Region merging (Sums of Square difference)

Each labeled region contains a distribution of intensities, and depending on the similarity of two neighboring regions, it may be possible to merge them. A merging criteria may use the sums of square difference (SSD) between the mean intensity of neighbor regions. If this difference is smaller than a preset threshold, a label merging is done. The merging of regions works iteratively, finding the two regions with smallest SSD and merging the smaller label region into that of the larger region. Merging continues until all neighborhood intensity differences are larger than the set threshold_ssd, in which case merging stops. After each iteration, all neighbor entries in C are updated to correspond with the newly merged label region.

### Step 4. Region merging (Size)

The merging process assumes that finding very small segmentations is unrealistic or of no interest, therefore these regions are merged with larger regions. This merging process follows the same approach as 3). However, instead of merging based on the SSD differences, the merging is now based on merging regions which are smaller than a set fixed number of voxels (threshold_size). As before, the merging continues until all regions are larger than the threshold.

### Step 5.) Interior point identification

This step removes the outer pixels of each label region such that all that remains are the interior voxels which are not subject to partial volume effect. Further, this removal of edge voxels also ensures that any pixels remaining are a viable candidate position for the diffraction analysis of the scanner module.

### Step 6. Classification

Based on a threat database of attenuation profiles, a classification algorithm is used to determine whether a segmented region contains a threat. Classification may for instance be based on mahalanobis distance, the K-nearest neighbor algorithm, or linear discriminant analysis. The advantage of using the Mahalanobis distance to do classification is that it only requires knowing the threat database, whereas the two other methods require knowing the attenuation profiles of non-threat materials. The Mahalanobis distance works by declaring a potential threat item as a non-threat once the distance between a database vector y and test material vector x becomes large enough.

Details from the above-mentioned embodiments and examples may be combined into other embodiments and examples within the scope of the patent claims.

## Claims

1. A method of security scanning of carry-on items (17, 18, 19, 20), comprising at least the following steps
a) receiving carry-on items (17, 18, 19, 20) as a group (4) of carry-on items on a carrier (16),
b) scanning the carry-on items (17, 18, 19, 20) simultaneously as a group (4) in a first stage module (3) using at least one X-ray source (6) and first detectors (7) to conduct transmission contrast radiography generating projections of two-dimensional image data of the carry-on items (17, 18, 19, 20), wherein
c) a three-dimensional representation of the group (4) of carry-on items is reconstructed by at least one processing unit (9),
d) the three-dimensional representation is analyzed by the at least one processing unit (9) to determine whether further scanning is required,
e) carry-on items (17, 18, 19, 20) in a group (4) determined in step d) to require further scanning are scanned as a group (4) of carry-on items in a second stage module (11) using at least one X-ray source (21) and at least one second detector (22),
and wherein at least three of the first detectors (7) used in step b) to conduct transmission contrast radiography are line-shaped and provide at least dual energy resolution, wherein said at least three of the first detectors (7) detect at least three projections of two-dimensional image data and have mutually different orientations,
**characterized in that** the three-dimensional representation of the group (4) of carry-on items is reconstructed by at least one processing unit (9) using the projections of two-dimensional image data generated in step b), wherein the three-dimensional representation is divided into voxels.

2. A method of security scanning of carry-on items according to claim 1, wherein the at least one X-ray source and first detectors are stationary during scanning in step b).

3. A method of security scanning of carry-on items according to claim 1 or 2, wherein the scanning in step b) generates from 3 to 20 projections of two-dimensional image data of the carry-on items, wherein reconstruction of the three-dimensional representation in step c) uses external information in addition to the two-dimensional image data from the at least 3 projections of the carry-on items, and wherein the external information is selected as one or more from a group comprising i-a) information on the outer shape of carry-on items in the group of carry-on items; i-b) real materials provide positive attenuation and no generation of X-rays in the material; i-c) an individual object in a carry-on item, or the carry-on item itself, has the same density; i-d) segmentation of the projections of two-dimensional image data provide information on boundaries between areas of different materials.

4. A method of security scanning of carry-on items according to one or more of claims 1 to 3, wherein the analyzing in step d) involves categorization of voxels or regions in the three-dimensional representation into one of known restricted materials, known safe materials, or unknown materials, wherein said categorization of voxels or regions is associated with an estimate of accuracy, wherein step d) determines that further scanning is required if an estimate of accuracy for a voxel or region categorized as a known restricted materials or known safe materials is below a first pre-defined threshold, and wherein step d) determines that further scanning is required if an estimate of accuracy for a voxel or region categorized as unknown materials is below a second pre-defined threshold, the second pre-defined threshold being higher than the first pre-defined threshold.

5. A method of security scanning of carry-on items according to one or more of claims 1 to 4, wherein the reconstruction of the three-dimensional representation in step c) comprises reconstruction at two or more mutually different energy channels.

6. A method of security scanning of carry-on items according to one or more of claims 1 to 5, wherein the carrier of the individual group of carry-on items is a cart used by a person to transport the person's personal group of carry-on items.

7. A method of security scanning of carry-on items according to one or more of claims 1 to 6, wherein the scanning in step e) of the group of carry-on items determined in step d) to have at least one local area requiring further scanning is further scanned in a second stage module, in which the group of carry-on items and the X-ray source are mutually positioned so that a measuring position is in line with the local area requiring further scanning, wherein the X-ray source emits photons in a polychromatic X-ray beam, and at least one second detector detects diffracted X-rays from the local area.

8. A method of security scanning of carry-on items according to claim 7, wherein a third detector in the second stage module detects X-rays in the direct beam from the local area.

9. A method of security scanning of carry-on items according to claim 7 or claim 8, wherein photons in the polychromatic X-ray beam are focussed towards the measuring position by a focusing device.

10. A method of security scanning of carry-on items according to one or more of claims 1 to 9, wherein the method involves intensity based segmentation of a 3D image, and subsequent merging of regions based on similarity and/or size below a threshold value.

11. A carry-on items security scanning system (1), comprising an inlet station (2) for carry-on items (17, 18, 19, 20) configured to receive a group (4) of carry-on items on a carrier (16), a first stage module (3) configured to simultaneously scan the group (4) of carry-on items on the carrier (16) and having at least one X-ray source (6) and first detectors (7) for conducting transmission contrast radiography generating projections of two-dimensional image data of the carry-on items (17, 18, 19, 20), at least one processing unit (9) operationally connected to said first detectors (7), wherein said at least one processing unit (9) is configured to reconstruct a three-dimensional representation of the group (4) of carry-on items and to analyze the three-dimensional representation to determine whether further scanning is required, a second stage module (11) is configured to scan the group (4) of carry-on items on the carrier (16) and having at least one X-ray source (21) and at least one second detector (22) for scanning the carry-on items (17, 18, 19, 20) requiring further scanning, and wherein at least three first detectors (7) in the first stage module (3) are line-shaped and arranged in mutually different orientations and have at least dual energy resolution,
**characterized in that** the at least one processing unit (9) is further configured to reconstruct a three-dimensional representation of the group (4) of carry-on items using the generated projections of two-dimensional image data, wherein the three-dimensional representation is divided into voxels.

12. A carry-on items security scanning system according to claim 11, wherein the first stage module has in the range of from 3 to 20 line-shaped detectors arranged in at least three different directions.

13. A carry-on items security scanning system according to one or more of claims 11 or 12, wherein the carrier is a cart for use by a person to transport the person's personal group of carry-on items.

14. A carry-on items security scanning system according to one or more of claims 11 to 13, wherein the second stage module has from 5 to 10 second detectors arranged around the central beam from the X-ray source at different angles to the direct beam and/or at different circumferential locations on the circle corresponding to a particular angle to the direct beam.

15. A carry-on items security scanning system according to one or more of claims 11 to 14, wherein in the second stage module two or more second detectors are arranged along a circle concentric with the direct beam path.

## Patentansprüche

1. Verfahren zum Sicherheitsscannen von Handgepäckstücken (17, 18, 19, 20), umfassend mindestens die folgenden Schritte
a) Aufnehmen von Handgepäckstücken (17, 18, 19, 20) als eine Gruppe (4) von Handgepäckstücken auf einem Träger (16),
b) gleichzeitiges Scannen der Handgepäckstücke (17, 18, 19, 20) als eine Gruppe (4) in einem ersten Stufenmodul (3) unter Verwendung mindestens einer Röntgenstrahlenquelle (6) und von ersten Detektoren (7) zum Durchführen von Transmissionskontrast-Radiographie, die Projektionen von zweidimensionalen Bilddaten der Handgepäcksstücke (17, 18, 19, 20) erzeugt, wobei
c) eine dreidimensionale Darstellung der Gruppe (4) von Handgepäckstücken durch mindestens eine Verarbeitungseinheit (9) rekonstruiert wird,
d) die dreidimensionale Darstellung durch die mindestens eine Verarbeitungseinheit (9) analysiert wird, um zu bestimmen, ob weiteres Scannen benötigt wird,
e) Handgepäckstücke (17, 18, 19, 20) in einer Gruppe (4), von denen in Schritt d) bestimmt wurde, dass sie weiteres Scannen benötigen, als eine Gruppe (4) von Handgepäckstücken in einem zweiten Stufenmodul (11) unter Verwendung mindestens einer Röntgenstrahlenquelle (21) und mindestens einem zweiten Detektor (22) gescannt werden,
und wobei mindestens drei der ersten Detektoren (7), die in Schritt b) verwendet wurden, um Transmissionskontrast-Radiographie durchzuführen, linienförmig sind und mindestens duale Energieauflösung bereitstellen, wobei die mindestens drei der ersten Detektoren (7) mindestens drei Projektionen von zweidimensionalen Bilddaten detektieren und voneinander verschiedene Ausrichtungen aufweisen,
**dadurch gekennzeichnet, dass** die dreidimensionale Darstellung der Gruppe (4) von Handgepäckstücken durch mindestens eine Verarbeitungseinheit (9) unter Verwendung der Projektionen von zweidimensionalen Bilddaten, die in Schritt b) erzeugt wurden, rekonstruiert wird, wobei die dreidimensionale Darstellung in Voxel unterteilt ist.

2. Verfahren zum Sicherheitsscannen von Handgepäckstücken nach Anspruch 1, wobei die mindestens eine Röntgenstrahlenquelle und erste Detektoren während des Scannens in Schritt b) stationär sind.

3. Verfahren zum Sicherheitsscannen von Handgepäckstücken nach Anspruch 1 oder 2, wobei das Scannen in Schritt b) 3 bis 20 Projektionen von zweidimensionalen Bilddaten der Handgepäckstücke erzeugt, wobei die Rekonstruktion der dreidimensionalen Darstellung in Schritt c) externe Informationen zusätzlich zu den zweidimensionalen Bilddaten aus den mindestens 3 Projektionen der Handgepäckstücke verwendet und wobei die externen Informationen ausgewählt werden aus einem oder mehreren aus einer Gruppe, umfassend i-a) Informationen über die äußere Form der Handgepäckstücke in der Gruppe von Handgepäckstücken; i-b) echte Materialien stellen positive Dämpfung und keine Erzeugung von Röntgenstrahlen im Material bereit; i-c) ein individuelles Objekt in einem Handgepäckstück oder das Handgepäckstück selbst weist die gleiche Dichte auf; i-d) Segmentierung der Projektionen von zweidimensionalen Bilddaten stellen Informationen über Grenzen zwischen Flächen von unterschiedlichen Materialien bereit.

4. Verfahren zum Sicherheitsscannen von Handgepäckstücken nach einem oder mehreren der Ansprüche 1 bis 3, wobei das Analysieren in Schritt d) das Kategorisieren von Voxeln oder Bereichen in der dreidimensionalen Darstellung in eines von bekannten eingeschränkten Materialien, bekannten sicheren Materialien oder unbekannten Materialien beinhaltet, wobei das Kategorisieren von Voxeln oder Bereichen einer Genauigkeitsschätzung zugeordnet ist, wobei Schritt d) bestimmt, dass weiteres Scannen benötigt wird, falls eine Genauigkeitsschätzung für ein Voxel oder einen Bereich, das bzw. der als bekannte eingeschränkte Materialien oder bekannte sichere Materialien kategorisiert wird, unterhalb eines ersten vordefinierten Schwellenwerts ist, und wobei Schritt d) bestimmt, dass weiteres Scannen benötigt wird, falls eine Genauigkeitsschätzung für ein Voxel oder einen Bereich, das bzw. der als unbekannte Materialien kategorisiert wird, unterhalb eines zweiten vordefinierten Schwellenwerts ist, wobei der zweite vordefinierte Schwellenwert höher als der erste vordefinierte Schwellenwert ist.

5. Verfahren zum Sicherheitsscannen von Handgepäckstücken nach einem oder mehreren der Ansprüche 1 bis 4, wobei die Rekonstruktion der dreidimensionalen Darstellung in Schritt c) eine Rekonstruktion an zwei oder mehreren voneinander verschiedenen Energiekanälen umfasst.

6. Verfahren zum Sicherheitsscannen von Handgepäckstücken nach einem oder mehreren der Ansprüche 1 bis 5, wobei der Träger der individuellen Gruppe von Handgepäckstücken ein von einer Person verwendeter Wagen ist zum Transportieren der persönlichen Gruppe von Handgepäckstücken der Person.

7. Verfahren zum Sicherheitsscannen von Handgepäckstücken nach einem oder mehreren der Ansprüche 1 bis 6, wobei das Scannen in Schritt e) der Gruppe von Handgepäckstücken, von der in Schritt d) bestimmt wurde, dass mindestens eine lokale Fläche weiteres Scannen benötigt, in einem zweiten Stufenmodul weiter gescannt wird, in welchem die Gruppe von Handgepäckstücken und die Röntgenstrahlenquelle zusammen derart positioniert sind, dass eine Messposition eine Linie mit der lokalen Fläche, die weiteres Scannen benötigt, ergibt, wobei die Röntgenstrahlenquelle Photonen in einem polychromen Röntgenstrahl emittiert und mindestens ein zweiter Detektor gebeugte Röntgenstrahlen von der lokalen Fläche detektiert.

8. Verfahren zum Sicherheitsscannen von Handgepäckstücken nach Anspruch 7, wobei ein dritter Detektor in dem zweiten Stufenmodul Röntgenstrahlen in dem direkten Strahl von der lokalen Fläche detektiert.

9. Verfahren zum Sicherheitsscannen von Handgepäckstücken nach Anspruch 7 oder Anspruch 8, wobei Photonen in dem polychromen Röntgenstrahl durch eine Fokussiervorrichtung zu der Messposition hin fokussiert werden.

10. Verfahren zum Sicherheitsscannen von Handgepäckstücken nach einem oder mehreren der Ansprüche 1 bis 9, wobei das Verfahren intensitätsbasierte Segmentierung eines 3D-Bildes und anschließendes Zusammenfügen von Bereichen auf Basis von Ähnlichkeit und/oder Größe unterhalb eines Schwellenwerts beinhaltet.

11. Sicherheitsscansystem (1) für Handgepäckstücke, umfassend eine Einlassstation (2) für Handgepäckstücke (17, 18, 19, 20), die ausgelegt ist, um eine Gruppe (4) von Handgepäckstücken auf einem Träger (16) aufzunehmen, ein erstes Stufenmodul (3), das ausgelegt ist, um die Gruppe (4) von Handgepäckstücken auf dem Träger (16) gleichzeitig zu scannen, und mindestens eine Röntgenstrahlenquelle (6) und erste Detektoren (7) zum Durchführen von Transmissionskontrast-Radiographie, die Projektionen von zweidimensionalen Bilddaten der Handgepäckstücke (17, 18, 19, 20) erzeugt, aufweist, mindestens eine Verarbeitungseinheit (9), die betriebsfähig mit den ersten Detektoren (7) verbunden ist, wobei die mindestens eine Verarbeitungseinheit (9) ausgelegt ist, um eine dreidimensionale Darstellung der Gruppe (4) von Handgepäckstücken zu rekonstruieren und um die dreidimensionale Darstellung zu analysieren, um zu bestimmen, ob weiteres Scannen benötigt wird, ein zweites Stufenmodul (11) ist ausgelegt, um die Gruppe (4) von Handgepäckstücken auf dem Träger (16) zu scannen, und weist mindestens eine Röntgenstrahlenquelle (21) und mindestens einen zweiten Detektor (22) zum Scannen der Handgepäckstücke (17, 18, 19, 20), die weiteres Scannen benötigen, auf, und wobei mindestens drei erste Detektoren (7) in dem ersten Stufenmodul (3) linienförmig und in voneinander verschiedenen Ausrichtungen angeordnet sind und mindestens duale Energieauflösung aufweisen,
**dadurch gekennzeichnet, dass** die mindestens eine Verarbeitungseinheit (9) ferner ausgelegt ist, um eine dreidimensionale Darstellung der Gruppe (4) von Handgepäckstücken unter Verwendung der erzeugten Projektionen von zweidimensionalen Bilddaten zu rekonstruieren, wobei die dreidimensionale Darstellung in Voxel unterteilt ist.

12. Sicherheitsscansystem für Handgepäckstücke nach Anspruch 11, wobei das erste Stufenmodul im Bereich von 3 bis 20 linienförmige Detektoren aufweist, die in mindestens drei verschiedene Ausrichtungen angeordnet sind.

13. Sicherheitsscansystem für Handgepäckstücke nach einem oder mehreren der Ansprüche 11 oder 12, wobei der Träger ein Wagen zur Benutzung durch eine Person ist, um die persönliche Gruppe von Handgepäckstücken der Person zu transportieren.

14. Sicherheitsscansystem für Handgepäckstücke nach einem oder mehreren der Ansprüche 11 bis 13, wobei das zweite Stufenmodul 5 bis 10 zweite Detektoren aufweist, die um den zentralen Strahl der Röntgenstrahlenquelle in unterschiedlichen Winkeln zu dem direkten Strahl und/oder an unterschiedlichen Umfangsstellen an dem Kreis, der einem bestimmten Winkel zu dem direkten Strahl entspricht, angeordnet sind.

15. Sicherheitsscansystem für Handgepäckstücke nach einem oder mehreren der Ansprüche 11 bis 14, wobei in dem zweiten Stufenmodul zwei oder mehrere zweite Detektoren entlang eines Kreises, der konzentrisch mit dem Pfad des direkten Strahls ist, angeordnet sind.

## Revendications

1. Procédé de scannage de sécurité de bagages à main (17, 18, 19, 20) comprenant au moins les étapes suivantes :
a) réception de bagages à main (17, 18, 19, 20) en tant que groupe (4) sur un support (16),
b) scannage des bagages à main (17, 18, 19, 20) simultanément en tant que groupe (4) dans un premier module d'étage (3) à l'aide d'au moins une source de rayons X (6) et de premiers détecteurs (7) pour effectuer une transmission de radiographie de contraste générant des projections de données d'images bidimensionnelles des bagages à main (17, 18, 19, 20), dans lequel
c) une représentation tridimensionnelle du groupe (4) de bagages à main est reconstruite par au moins une unité de traitement (9),
d) la représentation tridimensionnelle est analysée par l'au moins une unité de traitement (9) pour déterminer si un scannage supplémentaire est nécessaire,
e) des bagages à main (17, 18, 19, 20) dans un groupe (4) déterminé à l'étape d) comme nécessitant un scannage supplémentaire sont scannés en tant que groupe (4) de bagages à main dans un deuxième module d'étage (11) à l'aide d'au moins une source de rayons X (21) et d'au moins un deuxième détecteur (22),
et dans lequel au moins trois des premiers détecteurs (7) utilisés à l'étape b) pour effectuer une transmission de radiographie de contraste sont en forme de ligne et fournissent au moins une résolution en énergie double, lesdits au moins trois des premiers détecteurs (7) détectant au moins trois projections de données d'images bidimensionnelles et présentant des orientations différentes les unes des autres, **caractérisé en ce que** la représentation tridimensionnelle du groupe (4) de bagages à main est reconstruite par au moins une unité de traitement (9) à l'aide des projections de données d'images bidimensionnelles générées à l'étape b), la représentation tridimensionnelle étant divisée en voxels.

2. Procédé de scannage de sécurité de bagages à main selon la revendication 1, dans lequel l'au moins une source de rayons X et les premiers détecteurs sont stationnaires pendant le scannage à l'étape b).

3. Procédé de scannage de sécurité de bagages à main selon la revendication 1 ou 2, dans lequel le scannage à l'étape b) génère de 3 à 20 projections de données d'images bidimensionnelles des bagages à main, dans lequel la reconstruction de la représentation tridimensionnelle à l'étape c) emploie des informations externes en plus des données d'images bidimensionnelles issues des au moins 3 projections des bagages à main, et dans lequel les informations externes sont sélectionnées comme une ou plusieurs parmi un groupe comprenant i-a) des informations concernant la forme extérieure de bagages à main dans le groupe de bagages à main ; i-b) des produits réels apportent une atténuation positive et pas de génération de rayons X dans le produit ; i-c) un objet individuel dans un bagage à main, ou le bagage à main lui-même, présente la même densité ; i-d) la segmentation des projections de données d'images bidimensionnelles fournit des informations concernant des frontières entre des zones de produits différents.

4. Procédé de scannage de sécurité de bagages à main selon l'une ou plusieurs des revendications 1 à 3, dans lequel l'analyse à l'étape d) implique une classification de voxels ou de régions dans la représentation tridimensionnelle en l'un parmi des produits interdits connus, des produits sûrs connus, ou des produits inconnus, ladite classification de voxels ou de régions étant associée à une estimation de la précision, sachant que l'étape d) détermine qu'un scannage supplémentaire est nécessaire si une estimation de la précision pour un voxel ou une région classé(e) comme produit interdit connu ou comme produit sûr connu tombe en dessous d'un premier seuil prédéfini, et sachant que l'étape d) détermine qu'un scannage supplémentaire est nécessaire si une estimation de la précision pour un voxel ou une région classé(e) comme produit inconnu tombe en dessous d'un deuxième seuil prédéfini, le deuxième seuil prédéfini étant supérieur au premier seuil prédéfini.

5. Procédé de scannage de sécurité de bagages à main selon l'une ou plusieurs des revendications 1 à 4, dans lequel la reconstruction de la représentation tridimensionnelle à l'étape c) comprend la reconstruction au niveau de deux ou plusieurs canaux d'énergie différents les uns des autres.

6. Procédé de scannage de sécurité de bagages à main selon l'une ou plusieurs des revendications 1 à 5, dans lequel le support du groupe individuel de bagages à main est un chariot utilisé par une personne pour transporter le groupe de bagages à main personnel de la personne.

7. Procédé de scannage de sécurité de bagages à main selon l'une ou plusieurs des revendications 1 à 6, dans lequel le scannage à l'étape e) du groupe de bagages à main déterminé à l'étape d) comme ayant au moins une zone locale nécessitant un scannage supplémentaire est poursuivi dans un deuxième module d'étage, dans lequel le groupe de bagages à main et la source de rayons X sont positionnés l'un par rapport à l'autre de manière à ce qu'une position de mesure soit alignée avec la zone locale nécessitant le scannage supplémentaire, dans lequel la source de rayons X émet des photons dans un faisceau de rayons X polychromatique, et au moins un deuxième détecteur détecte des rayons X diffractés en provenance de la zone locale.

8. Procédé de scannage de sécurité de bagages à main selon la revendication 7, dans lequel un troisième détecteur dans le deuxième module d'étage détecte des rayons X dans le faisceau direct venant de la zone locale.

9. Procédé de scannage de sécurité de bagages à main selon la revendication 7 ou la revendication 8, dans lequel des photons dans le faisceau de rayons X polychromatique sont focalisés sur la position de mesure par un dispositif de focalisation.

10. Procédé de scannage de sécurité de bagages à main selon l'une ou plusieurs des revendications 1 à 9, dans lequel le procédé implique une segmentation d'une image 3D sur la base de l'intensité, et la fusion consécutive de régions sur la base de similarités et/ou d'une taille en dessous d'une valeur seuil.

11. Système de scannage de sécurité de bagages à main (1), comprenant une station d'entrée (2) destinée à des bagages à main (17, 18, 19, 20), configurée pour recevoir un groupe (4) de bagages à main sur un support (16), un premier module d'étage (3) configuré pour scanner simultanément le groupe (4) de bagages à main sur le support (16) et présentant au moins une source de rayons X (6) et des premiers détecteurs (7) destinés à effectuer une transmission de radiographie de contraste générant des projections de données d'images bidimensionnelles des bagages à main (17, 18, 19, 20), au moins une unité de traitement (9) fonctionnellement reliée auxdits premiers détecteurs (7), dans lequel ladite au moins une unité de traitement (9) est configurée pour reconstruire une représentation tridimensionnelle du groupe (4) de bagages à main et pour analyser la représentation tridimensionnelle afin de déterminer si un scannage supplémentaire est nécessaire, un deuxième module d'étage (11) configuré pour scanner le groupe (4) de bagages à main sur le support (16) et présentant au moins une source de rayons X (21) et au moins un deuxième détecteur (22) pour scanner les bagages à main (17, 18, 19, 20) nécessitant un scannage supplémentaire, et dans lequel au moins trois premiers détecteurs (7) dans le premier module d'étage (3) sont en forme de ligne et disposés selon des orientations différentes les unes des autres, tout en présentant au moins une résolution en énergie double,
**caractérisé en ce que** l'au moins une unité de traitement (9) est en outre configurée pour reconstruire une représentation tridimensionnelle du groupe (4) de bagages à main à l'aide des projections de données d'images bidimensionnelles générées, la représentation tridimensionnelle étant divisée en voxels.

12. Système de scannage de sécurité de bagages à main selon la revendication 11, dans lequel le premier module d'étage présente entre 3 et 20 détecteurs en forme de ligne, disposés dans au moins trois directions différentes.

13. Système de scannage de sécurité de bagages à main selon l'une ou plusieurs des revendications 11 et 12, dans lequel le support est un chariot destiné à être utilisé par une personne pour transporter le groupe de bagages à main personnel de la personne.

14. Système de scannage de sécurité de bagages à main selon l'une ou plusieurs des revendications 11 à 13, dans lequel le deuxième module d'étage comporte entre 5 et 10 deuxièmes détecteurs disposés autour du faisceau central provenant de la source de rayons X selon des angles différents par rapport au faisceau direct et/ou à des emplacements circonférentiels différents sur le cercle correspondant à un angle particulier par rapport au faisceau direct.

15. Système de scannage de sécurité de bagages à main selon l'une ou plusieurs des revendications 11 à 14, dans lequel, dans le deuxième module d'étage, deux ou plusieurs deuxièmes détecteurs sont disposés le long d'un cercle concentrique au trajet du faisceau direct.
